# EUROPEAN PATENT SPECIFICATION

(11) **EP 3 597 141 B1**
(45) Date of publication and mention of the grant of the patent: **03.05.2023**
(21) Application number: 18766657.3
(22) Date of filing: 16.03.2018
(51) Int. Cl.: A61C 5/42, A61C 5/48, A61C 5/46

(54) **ENDODONTIC FILE FOR DENTAL ENDODONTIC TREATMENT**
WURZELKANALFEILE ZUR ZAHNMEDIZINISCHEN WURZELKANALBEHANDLUNG
LIME ENDODONTIQUE POUR TRAITEMENT ENDODONTIQUE DENTAIRE

(30) Priority: 17.03.2017 KR 20170033709
(43) Date of publication of application: 22.01.2020
(73) Proprietor: Denflex Co., Ltd., Seoul 08381 (KR)
(72) Inventor: KIM, Hyung-Woo, Goyang-si Gyeonggi-do 10374 (KR)
(74) Representative: Lermer, Christoph
(86) International application number: PCT/KR2018/003120
(87) International publication number: WO 2018/169362

(56) References cited:
- DE-C- 837 146
- FR-A1- 2 821 000
- KR-B1- 101 344 570
- US-A- 5 366 493
- US-A- 5 488 761
- US-A1- 2006 210 947
- US-A1- 2012 231 413

## Description

### BACKGROUND OF THE INVENTION

### Field of the Invention

The present invention generally relates to an endodontic file for treatment of a dental nerve. More particularly, the present invention relates to an improved endodontic file for treatment of a dental nerve, wherein a head part combined with a rotational power tool, a tissue removing blade part removing diseased tooth tissues, and a stress dispersing part including helical coil spring rods having the same central axis as a central axis of rotation of the endodontic file between the head part and the tissue removing blade part are provided so that fracture of the endodontic file during use is minimized.

### Description of the Related Art

Generally, an endodontic file, which is a medical tool that removes a dental nerve, is introduced deep into a root canal in which a lesion has developed to remove diseased nerves and/or tissues, and is manufactured of elastic materials since the endodontic file is required to bend according to a shape of a tooth.

Such an endodontic file, which is widely used by all dentists around the world, is mounted to a rotational power tool and is automatically rotated by a force of an air or electric motor.

As for a conventional endodontic file, when a head part detachably connected to a power tool rotates, the rotational force is transferred to a tissue removing blade part, which causes the tissue removing blade part to rotate, and the rotating tissue removing blade part removes the nerves, blood vessels, and tissues of the diseased tooth for nerve treatment. During the course of such a nerve treatment, the tissue removing blade part of the endodontic file is repeatedly drawn in and out of the root canal.

DE 837 146 C describes a flexible tooth root nerve needle with a needle part for removing the nerve from a tooth root canal.

FR 2 821 0000 A1 discloses a reaming instrument, in particular for reaming dental canals comprising a conventional base and guide area and a cutting area.

However, the conventional endodontic file has a problem that the tissue removing blade part often breaks during nerve treatment. Such a fracture of the tissue removing blade part of the endodontic file occurs for such reasons as excessive stress focused on the tissue removing blade part by rotation resistance due to nerves and tissues, stress focused on the tissue removing blade part rotating at a highly bent portion of the root canal, or excessive stress instantaneously focused on a specific portion of the tissue removing blade part when the tissue removing blade part is tightly stuck in the root canal while the tissue removing blade part is rotated by a rotational force transferred from the head part, with the tissue removing blade part inserted into the root canal.

### SUMMARY OF THE INVENTION

Accordingly, the present invention has been made keeping in mind the above problems occurring in the related art, and the present invention is intended to propose an improved endodontic file for treatment of a dental nerve, wherein fracture of the endodontic file due to stress caused by rotation resistance occurring during rotation of the endodontic file introduced into a root canal is minimized.

In addition, the present invention is intended to propose an endodontic file for treatment of a dental nerve, which allows a clinician to easily detect that a tissue removing blade part of the endodontic file has excessive stress due to unusual sounds and feeling perceived during winding of a stress dispersing part having a plurality of helical coil spring rods prior to occurrence of stress to break the endodontic file when the endodontic file rotates after being introduced into the root canal.

Furthermore, to solve a problem that while the tissue removing blade part of the existing endodontic file rotates in the root canal, a portion of a tip of the tissue removing blade part is broken by stress applied thereto and becomes stuck in the root canal, the present invention is intended to propose an endodontic file having better stability for treatment of a dental nerve, wherein if any portion of the endodontic file is broken by excessive stress generated while the endodontic file rotates in the root canal, the fracture is induced to occur on the stress dispersing part provided at a connection part between a head part removably coupled to a power tool and the tissue removing blade part and having the plurality of helical coil spring rods, so that broken segments are not stuck in the root canal and are easily removed therefrom.

In order to achieve the above objectives, according to one aspect of the present invention, there is provided an endodontic file for treatment of a dental nerve, the endodontic file including: a head part inserted into and removably coupled to a rotary power tool; a tissue removing blade part inserted into a root canal of a patient and removing diseased tooth nerves; and a stress dispersing part composed of a plurality of helical coil spring rods having the same inner diameter and central axis in the same section of a longitudinal direction thereof between the head part and the tissue removing blade part.

The plurality of helical coil spring rods may be provided by being spirally cut through the central axis of rotation of the endodontic file therealong in the longitudinal direction of the endodontic file.

The plurality of helical coil spring rods may constitute a plurality of coil springs having the same inner diameter and central axis respectively, wherein the plurality of coil springs may have the plurality of coil spring rods alternately positioned from each other in upward and downward directions by having another coil spring rod positioned between an upper position and a lower position of a coil spring rod.

The plurality of helical coil spring rods may be positioned to face each other, with a horizontal through hole passing through the central axis of rotation of the endodontic file arranged therebetween. The invention is defined by an endodontic file with the technical features of claim 1. Preferred embodiments of the invention are defined in the dependent claims.

According to the present invention, the endodontic file has the following effects.

When excessive rotation resistance is applied to the tissue removing blade part of the endodontic file while diseased tooth tissues in the root canal are removed by the endodontic file rotated by a rotational power of a power tool, the plurality of helical coil spring rods formed between the head part and the tissue removing blade part are wound. In this case, a clinician can perceive that the excessive resistance is applied to the tissue removing blade part and, at the same time, that the tissue removing blade part is overloaded due to unusual sounds produced while the plurality of coil spring rods bump into each other. Further, while the plurality of coil spring rods are wound, a certain amount of stress is absorbed and an amount of stress that may occur on the tissue removing blade part is reduced. Furthermore, due to the winding of the plurality of coil spring rods, immediate generation of stress on the tissue removing blade part is delayed. Accordingly, the tissue removing blade part is allowed to take time and push tooth tissues at a relatively slow speed while rotating. Consequently, impact applied to the tissue removing blade part is decreased and thus a potential fracture of the endodontic file is considerably reduced.

In addition, due to the winding of the coil springs when the excessive resistance is applied to the tissue removing blade part, an unusual feeling is perceived during the winding of the coil springs and unusual sounds are produced when the coil spring rods bump into each other, whereby a clinician can easily perceive that excessive resistance is applied to the tissue removing blade part and thus take steps to prevent the fracture of the tissue removing blade part. Accordingly, higher stability can be achieved compared to the existing endodontic file during a dental nerve treatment by using the endodontic file.

Furthermore, the stress dispersing part composed of the plurality of coil spring rods has a structure of a plurality of coil springs, so a connection part having the stress dispersing part may be easily bent at an angle of 90°, with the tissue removing blade part inserted into the root canal. Accordingly, in nerve treatment of teeth located inside a mouth of a patient with restricted mouth opening, the tissue removing blade part of the endodontic file may efficiently receive a rotational force of a power tool, with an upper portion of the tissue removing blade part bent at an angle of 90°. Accordingly, treatment is possible even though the patient does not open his or her mouth widely. Consequently, according to the present invention, a patient whose a dental nerve treatment could not be performed by a power tool, can receive e dental nerve treatment by the power tool, so that comfort and convenience are provided to a patient and a clinician.

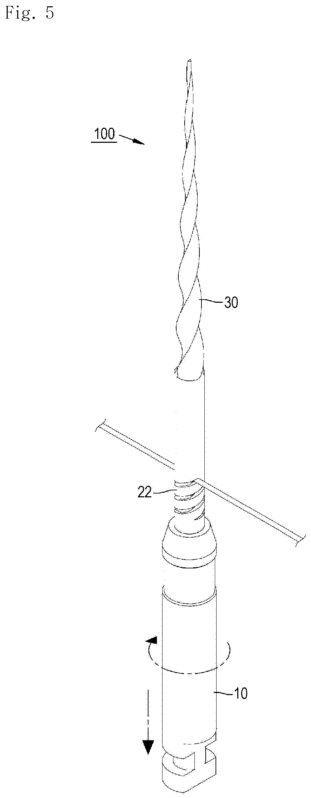

Hereinbelow, functional differences between the invention of Taiwan Patent Publication No. TW200820948A (hereinbelow, referred to as a prior art) and the present invention will be further described. For reference, FIGS. 6 and 7 of the prior art illustrate a structure of a single spring of a connection part connecting a tissue removing blade part with a head part. As illustrated in FIG. 5 of the prior art, a straight single rod of directly connecting the tissue removing blade part with the head part is provided, and the spring structure, which is not connected integrally to the straight rod, spirally surrounds the straight rod.

### 1. Functional difference 1

The prior art has shock absorbing effects to some degree due to the single spring structure, but since the connection part integrally and directly connecting the head part and the tissue removing blade part therebetween is configured to be the single rod, a cross-sectional area of the connection part, for structural stability, is required to be larger than or the same as a cross-sectional area of the tissue removing blade part, which often breaks during rotation in the root canal. Consequently, although the connection part connected directly to the tissue removing blade part includes the single spring structure, the connection part may have a shock absorption effect due to the spring structure only when magnitude of rotation resistance applied to the tissue removing blade part is a considerable magnitude or more. Accordingly, even in the prior art as the existing different endodontic files, the tissue removing blade part breaks due to excessive stress occurring therein while rotating in the root canal.

Additionally, the straight rod connected directly to the tissue removing blade part is positioned at a middle of the endodontic file, and the spring structure, which is not integrated with the straight rod and simply surrounds the straight rod, does not have a function of buffering the rotation resistance applied to the tissue removing blade part and only has a limited function of buffering lateral pressure applied therreto when the endodontic file moves from side to side.

The endodontic file of the present invention includes the stress dispersing part composed of the plurality of coil spring rods provided in the connection part directly and integrally connecting the head part and the tissue removing blade part. Preferably, for structural stability, a sum of cross-sectional areas of the plurality of coil spring rods is required to be larger than or the same as a cross-sectional area of the tissue removing blade part, which often breaks during rotation in the root canal. However, in this case, a cross-sectional area of each of the coil spring rods may be configured to be the same as or smaller than the cross-sectional area of the tissue removing blade part. Accordingly, each of the plurality of coil spring rods of the present invention can more immediately respond even to low rotation resistance than the single rod of the prior art, so stress dispersion or a buffering effect can be maximized.

### 2. Functional difference 2

As for an endodontic file of the prior art, when excessive stress occurs in the tissue removing blade part while the tissue removing blade part of the endodontic file rotates in the root canal, the tissue removing blade part may break and the broken tissue removing blade part may be stuck in the root canal such that the broken part is not easily removed therefrom. On the contrary, according to the present invention, the plurality of helical coil spring rods provided by being spirally cut through the central axis of rotation of the endodontic file therealong in the longitudinal direction of the endodontic file are positioned to face each other, with a horizontal through hole passing through the central axis of rotation of the endodontic file arranged therebetween.

Accordingly, when excessive rotation resistance is applied to the tissue removing blade part since the tissue removing blade part is stuck during rotating, the rotation resistance is distributed to the plurality of coil spring rods arranged to be spirally formed through the central axis therealong. However, in this case, among the plurality of coil spring rods, a force applied to coil spring rods located at an immediate upper portion of a position of an outer circumferential surface of the tissue removing blade part to which the rotation resistance is directly applied and a force applied to other coil spring rods further located from the position to which the rotation resistance is directly applied are different. Accordingly, deformation degrees of the coil spring rods facing each other are different. Consequently, when any one spring rod has deformation and stress of a limitation value or more, a spring rod firstly reaching the limitation value or more breaks. Accordingly, the broken spring rod cannot equally distribute the rotation resistance and the rotation resistance is concentrated on the remaining spring rods, so the remaining spring rods are broken consecutively.

Accordingly, unlike the prior art, the tissue removing blade part of the present invention does not break when the tissue removing blade part has the excessive stress, but the stress dispersing part composed of the plurality of coil spring rods breaks. Accordingly, after the fracture of the stress dispersing part of the endodontic file, the fractured part can be easily removed from teeth.

### 3. Functional difference 3

When excessive rotation resistance is applied to the tissue removing blade part of the present invention and torsional deformations occur in the plurality of coil spring rods, the plurality of coil spring rods bump into each other and produces unusual sounds. Consequently, a clinician perceives that the excessive rotation resistance is applied to the endodontic file. Accordingly, the endodontic file of the present invention has a pre-warning function such that the endodontic file is removed from an inner part of the root canal before the endodontic file breaks. Such a pre-warning function is not disclosed in or applied to the prior art and the existing endodontic file.

### 4. Functional difference 4

Generally, during treatment by using the endodontic file, a stopper made of a rubber is located at the connection part of the endodontic file so that a clinician perceives treatment depth of the endodontic file by a position of the stopper. As for the endodontic file of the prior art, the connection part is configured to have a single coil spring structure, so it is impossible or difficult for the stopper to move upward and downward along a longitudinal direction of the endodontic file. When the spring structure of the connection part is bent in a side direction thereof during use of the endodontic file although the stopper is used, wide space is produced between an upper part and a lower part of the spring structure of an outer surface of the bent portion. Accordingly, when the stopper is located at the bent portion, the stopper is moved to an unintended position and accordingly, an appropriate use of the stopper is impossible. On the contrary, the connection part of the present invention is configured to have the plurality of coil spring rods having the same central axis within the same outer diameter. Accordingly, even in a state of bending of the connection part, the stopper is not moved to an unintended position, so the stopper can be used accurately and effectively during the treatment by using the endodontic file.

### BRIEF DESCRIPTION OF THE DRAWINGS

The above and other objects, features and other advantages of the present invention will be more clearly understood from the following detailed description when taken in conjunction with the accompanying drawings, in which:
FIG. 1 is a perspective view illustrating a structure of an endodontic file according to a first embodiment of the present invention, wherein a stress dispersing part is provided between a head part and a tissue removing blade part;
FIG. 2 is a cut-away perspective view illustrating cut surfaces formed by cutting the stress dispersing part of FIG. 1;
FIG. 3 is a perspective view illustrating a structure of an endodontic file according to a second embodiment of the present invention, wherein a stress dispersing part is provided between the head part and the tissue removing blade part;
FIG. 4 is a cut-away perspective view illustrating cut surfaces formed by cutting the stress dispersing part of FIG. 3; and
FIG. 5 is a perspective view illustrating a method of processing the stress dispersing part having helical coil spring rods in the endodontic file according to the present invention.

### DETAILED DESCRIPTION OF THE INVENTION

Hereinbelow, exemplary embodiments of the present invention will be described in detail with reference to the accompanying drawings.

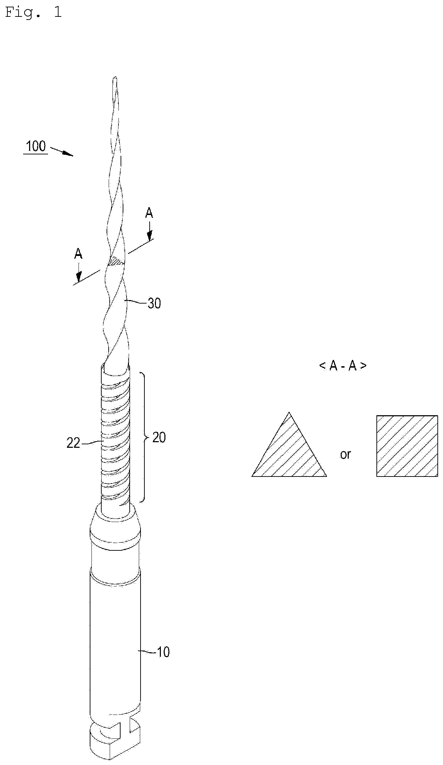

As illustrated in FIG. 1, an endodontic file 100 for treatment of a dental nerve according to the present invention includes a head part 10 inserted into and removably coupled to a rotary power tool; a tissue removing blade part 30 inserted into a root canal of a patient and removing diseased tooth nerves; and a stress dispersing part 20 composed of a plurality of helical coil spring rods 22 having the same inner diameter and central axis in the same section of a longitudinal direction thereof between the head part 10 and the tissue removing blade part 30.

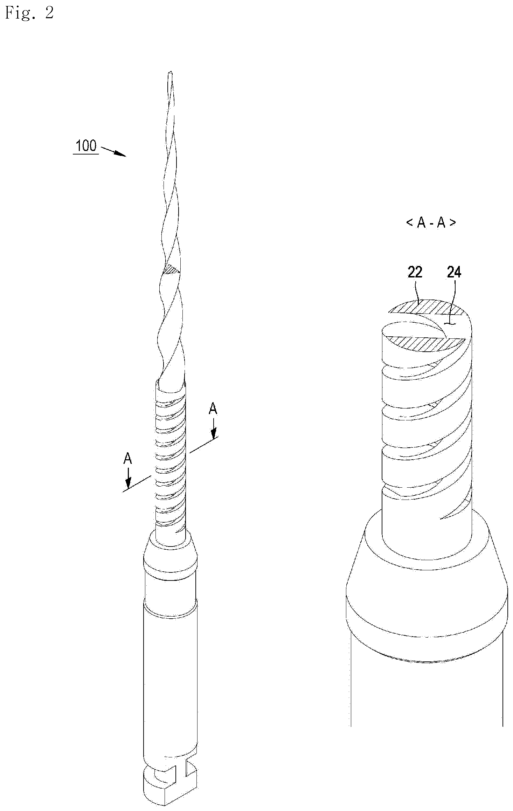

Referring to FIGS. 1 and 2, the stress dispersing part 20 includes the plurality of helical coil spring rods provided in a connection part between the head part 10 and the tissue removing blade part 30. The plurality of helical coil spring rods are provided by being spirally cut through the central axis of rotation of the endodontic file therealong in the longitudinal direction of the endodontic file. Accordingly, the stress dispersing part 20 is configured to have the horizontal through holes spirally formed along a longitudinal direction of the endodontic file.

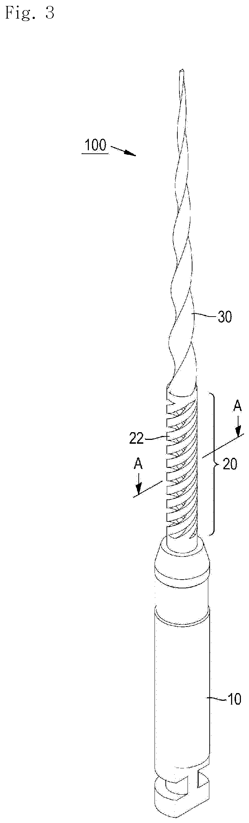

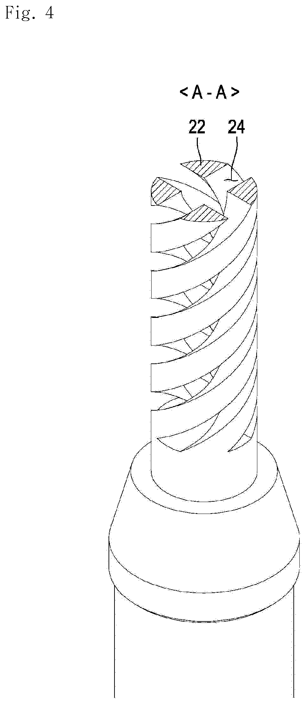

Referring to FIGS. 1 and 2, the stress dispersing part 20 may be provided between the head part 10 and the tissue removing blade part 30 and have two helical coil spring rods. Referring to FIG. 2, a cross section of the stress dispersing part 20 is divided into two cross sections. Meanwhile, referring to FIGS. 3 and 4, the stress dispersing part 20 may be provided between the head part and the tissue removing blade part and have four helical coil spring rods 22. Referring to FIG. 4, a cross section of the stress dispersing part 20 is divided in four cross sections. Accordingly, it is obvious that the helical coil spring rods maybe formed in plural.

Referring to FIG. 2, the plurality of helical coil spring rods 22 constitute a plurality of coil springs having the same inner diameter and central axis respectively, wherein the plurality of coil springs have the plurality of coil spring rods alternately positioned from each other in upward and downward directions by having another coil spring rod positioned between an upper position and a lower position of a coil spring rod. Furthermore, the plurality of helical coil spring rods 22 are positioned to face each other, with each of the horizontal through holes passing through the central axis of rotation of the endodontic file arranged therebetween. Preferably, the helical coil spring rods are configured to have a shape wound at an angle of at least 1080°.

When the excessive resistance is applied to the rotating tissue removing blade part of the endodontic file while the endodontic file removes diseased tooth tissues while being rotated by the rotational force of the power tool, such a stress dispersing part 20 absorbs a certain amount of stress and prevents stress from being concentrated on the tissue removing blade part. That is, the coil spring rods absorb a certain amount of stress while the helical coil spring rods formed at an upper portion of the tissue removing blade part are wound when the excessive resistance is applied to the rotating tissue removing blade part of the endodontic file during the treatment. Accordingly, magnitude of the stress which may be concentrated on the tissue removing blade part is reduced.

In addition, when excessive rotation resistance is applied to the tissue removing blade part, the stress dispersing part 20 delays immediate generation of stress on the tissue removing blade part in such a manner that the coil spring rods are wound, and allows the tissue removing blade part to take time and push tooth tissues at a relatively slow speed while rotating. Consequently, impact directly applied to the tissue removing blade part is buffered and the possibility of the fracture of the tissue removing blade part of the endodontic file is considerably decreased.

Furthermore, due to the winding of coil springs of the stress dispersing part 20 occurring when the excessive rotation resistance is applied to the tissue removing blade part during treatment and unusual feeling and sounds perceived during the winding of the coil springs, a clinician can detect that excessive resistance is applied to the tissue removing blade part and take steps prior to the fracture of the tissue removing blade part. Accordingly, excellent stability is obtained during the dental nerve treatment performed by the endodontic file.

Meanwhile, the stress dispersing part composed of the plurality of coil spring rods has a structure of the plurality of coil springs, so the connection part having the stress dispersing part may be easily bent at an angle of 90° or more due to a characteristic of the coil spring structure. Accordingly, a clinician can efficiently transfer the rotational force of the power tool to the tissue removing blade part of the endodontic file with the connection part of the endodontic file bent at an angle of about 90°. Accordingly, comfortable treatment is possible although a patient does not open his or her mouth widely.

Preferably, as illustrated in a cross-sectional view taken along line A-A of FIG.1, a cross section of the tissue removing blade part 30 may be configured to have a triangular or rectangular shape.

Although the tissue removing blade part of the endodontic file according to the present invention has any shape, the effects of the present invention can be achieved. The most effective structure of the tissue removing blade part in which the function of the stress dispersing part composed of the coil spring rods is maximized is a triangular structure having a tissue removal blade formed at every angle of 120° or a rectangular structure having a tissue removal blade formed at every angle of 90° when the tissue removing blade part is seen from the cross section thereof relative to the longitudinal direction of the endodontic file.

This is because the coil spring rods absorb a certain amount of stress and time reaching a maximum value of the rotation resistance is delayed while the coil spring rods of the stress dispersing part provided at an upper portion of the tissue removing blade part are wound when the rotation resistance is applied to the tissue removing blade part having such a cross section having a triangular or a rectangular shape in the root canal. In this case, capability of the coil spring rods restored by elastic force after being wound in the longitudinal direction is excellent, so a situation in which the rotation resistance is applied to the tissue removing blade part can be overcome most effectively.

A method of machining the coil spring rods 22 constituting the stress dispersing part 20 of the present invention will be described hereinbelow.

First, a cutting part s having a linear shape of a processing machine such as a wire discharge cutting machine or a laser cutting machine is positioned to pass through a portion to become a central axis perpendicular to an inner diameter of a coil spring from an outer surface of a predetermined portion between the head part and the tissue removing blade part of the endodontic file and to pass through an outer surface of a side contrary to a side of the outer surface. Next, the coil spring rods are cut while one or both of the endodontic file and the cutting part s are rotated and, at the same time, the one or both of the endodontic file and the cutting part s are moved forward or backward along the portion to become the central axis perpendicular to the inner diameter of the coil spring. Accordingly, the stress dispersing part composed of the helical coil spring rods may be formed. The central axis of rotation of the endodontic file or the cutting part s has the same central axis as the central axis perpendicular to the inner diameter of each of the helical coil spring rods. For reference, FIG. 5 illustrates an example of machining the coil spring rods in such a manner that the head part is moved backward at the same time when the endodontic file is rotated, with the cutting part s fixed. As illustrated in FIGS. 2 and 4, spiral cut parts 24 are formed between the coil spring rods machined in such a manner.

Meanwhile, as illustrated in FIGS. 3 and 4, in forming the stress dispersing part 20 composed of four helical coil spring rods, first, two helical coil spring rods are provided by using the wire discharge cutting machine or the laser cutting machine in the above-mentioned processing method, and then two coil spring rods are further provided by using the wire discharge cutting machine. Finally, four helical coil spring rods may be formed. Considering productivity, it is ideal to form four coil spring rods at a time by using a laser cutting machine. This is because when two helical coil spring rods are machined and then the remaining two helical coil spring rods are machined by the laser cutting machine, welding occurs during the second laser cutting, so performance and function of the coil spring rods deteriorate.

Preferably, the number of the coil spring rods may be differently provided at every portion between the head part and the tissue removing blade part. That is, four coil spring rods may be provided at a portion adjacent to the head part and two coil spring rods may be provided at a portion adjacent to the tissue removing blade part. Accordingly, the number of the coil spring rods may vary according to a portion between the head part and the tissue removing blade part.

Meanwhile, the coil spring rods may be provided by being helically cut from an outer surface of the endodontic file to a through hole along the longitudinal direction of the endodontic file after the through hole is provided at the central axis of the endodontic file in the longitudinal direction thereof.

Although the preferred embodiments of the present invention has been described for illustrative purposes, those skilled in the art will appreciate that various modifications, additions and substitutions are possible, without departing from the scope of the invention as disclosed in the accompanying claims. For example, the cross-sectional shape and the number of the horizontal through hole 152 may vary while exhibiting the same effect. However, it is intended that such simple modifications or variations be made within the scope of the present invention.

## Claims

1. An endodontic file (100) for treatment of a dental nerve, the endodontic file comprising:
a head part (10);
a tissue removing blade part (30) to be inserted into a root canal for removing diseased nerves; and
a stress dispersing part (20) composed of a plurality of helical coil spring rods (22) having the same inner diameter and central axis in the same section of a longitudinal direction thereof between the head part (10) and the tissue removing blade part (30), **characterized in that** the plurality of helical coil spring rods (22) are spirally cut through the central axis of rotation of the endodontic file (100) therealong in the longitudinal direction of the endodontic file (100), wherein the plurality of helical coil spring rods (22) are positioned to face each other, with spiral cut parts (24) formed between the coil spring rods, through the central axis of rotation of the endodontic file (100) therealong in the longitudinal direction of the endodontic file (100).

2. The endodontic file of claim 1, wherein the plurality of helical coil spring rods (22) constitute a plurality of coil springs, wherein the plurality of coil springs have the plurality of coil spring rods alternately positioned from each other in upward and downward directions by having another coil spring rod positioned between an upper position and a lower position of a coil spring rod.

3. The endodontic file of claim 1, wherein the plurality of helical coil spring rods (22) are positioned to face each other, with a horizontal through hole (152) passing through the central axis of rotation of the endodontic file (100) arranged therebetween.

4. The endodontic file of claim 1, wherein a cross section of the tissue removing blade part (30) is configured to have a triangular or rectangular shape.

5. The endodontic file of claim 1, wherein the central axis of rotation of the endodontic file (100) has the same central axis as the central axis perpendicular to the inner diameter of each of the helical coil spring rods (22).

6. The endodontic file of claim 1, wherein the stress dispersing part (20) composes of four helical coil spring rods.

7. The endodontic file of claim 1, wherein the coil spring rods (22) are helically cut from an outer surface of the endodontic file to a through hole along the longitudinal direction of the endodontic file (100) after the through hole is provided at the central axis of the endodontic file (100) in the longitudinal direction thereof.

## Patentansprüche

1. Wurzelkanalfeile (100) zur Behandlung eines Zahnnervs, wobei die Wurzelkanalfeile umfasst:
ein Kopfteil (10);
ein gewebeentfernendes Klingenteil (30), das in einen Wurzelkanal zur Entfernung von erkrankten Nerven eingeführt wird; und
ein spannungsverteilendes Teil (20), das aus einer Vielzahl von wendelförmigen Spiralfederstäben (22) besteht, die denselben Innendurchmesser und dieselbe Mittelachse in demselben Abschnitt ihrer Längsrichtung zwischen dem Kopfteil (10) und dem gewebeentfernenden Klingenteil (30) aufweisen, **dadurch gekennzeichnet, dass** die Vielzahl von wendelförmigen Spiralfederstäben (22) spiralförmig durch die zentrale Rotationsachse der Wurzelkanalfeile (100) entlang dieser in der Längsrichtung der Wurzelkanalfeile(100) geschnitten sind, wobei die Vielzahl der Spiralfederstäbe (22) einander zugewandt angeordnet sind, wobei zwischen den wendelförmigen Spiralfederstäben spiralförmig geschnittene Teile (24) durch die zentrale Drehachse der Wurzelkanalfeile (100) entlang dieser in der Längsrichtung der Wurzelkanalfeile (100) gebildet werden.

2. Wurzelkanalfeile nach Anspruch 1, wobei die Vielzahl von wendelförmigen Spiralfederstäben (22) eine Vielzahl von Spiralfedern bilden, wobei die Vielzahl von Spiralfedern die Vielzahl von wendelförmigen Spiralfederstäben abwechselnd in Aufwärts- und Abwärtsrichtung zueinander angeordnet sind, indem ein anderer Spiralfederstab zwischen einer oberen Position und einer unteren Position eines Spiralfederstabs angeordnet ist.

3. Wurzelkanalfeile nach Anspruch 1, wobei die Vielzahl der Spiralfederstäbe (22) einander gegenüberliegend angeordnet sind, umfassend ein horizontales Durchgangsloch (152), das durch die zentrale Drehachse der Wurzelkanalfeile (100) verläuft, dazwischen angeordnet ist.

4. Wurzelkanalfeile nach Anspruch 1, wobei ein Querschnitt des gewebeentfernenden Klingenteils (30) dreieckig oder rechteckig gestaltet ist.

5. Wurzelkanalfeile nach Anspruch 1, wobei die zentrale Rotationsachse der Wurzelkanalfeile (100) die gleiche zentrale Achse hat, wie die zentrale Achse senkrecht zum Innendurchmesser jedes der Spiralfederstäbe (22).

6. Wurzelkanalfeile nach Anspruch 1, wobei das spannungsverteilende Teil (20) aus vier wendelförmigen Spiralfederstäben besteht.

7. Wurzelkanalfeile nach Anspruch 1, wobei die Spiralfederstäbe (22) von einer Außenfläche der Wurzelkanalfeile zu einem Durchgangsloch entlang der Längsrichtung der Wurzelkanalfeile (100) spiralförmig geschnitten sind, nachdem das Durchgangsloch an der Mittelachse der Wurzelkanalfeile (100) in deren Längsrichtung angeordnet ist.

## Revendications

1. Lime endodontique (100) pour le traitement d'un nerf dentaire, la lime endodontique comprenant :
une partie tête (10) ;
une partie lame de retrait de tissu (30) à insérer dans un canal radicalaire pour retirer les nerfs malades ; et
une partie de dispersion des contraintes (20) composée d'une pluralité de tiges de ressort en bobine hélicoïdale (22) ayant les mêmes diamètre interne et axe central dans la même section d'une direction longitudinale de celle-ci entre la partie tête (10) et la partie lame de retrait de tissu (30), **caractérisée en ce que** la pluralité de tiges de ressort en bobine hélicoïdale (22) sont coupées en spirale à travers l'axe de rotation central de la lime endodontique (100) le long de celle-ci dans la direction longitudinale de la lime endodontique (100), dans laquelle la pluralité de tiges de ressort en bobine hélicoïdale (22) sont positionnées pour être les unes face aux autres, avec des parties coupées en spirale (24) formées entre les tiges de ressort hélicoïdal, à travers l'axe de rotation central de la lime endodontique (100) le long de celle-ci dans la direction longitudinale de la lime endodontique (100).

2. Lime endodontique selon la revendication 1, dans laquelle la pluralité de tiges de ressort en bobine hélicoïdale (22) constitue une pluralité de ressorts hélicoïdaux, dans laquelle la pluralité de ressorts hélicoïdaux ont la pluralité de tiges de ressort en bobine hélicoïdale positionnées en alternance les unes par rapport aux autres dans des directions vers le haut et vers le bas en ayant une autre tige de ressort hélicoïdal positionnée entre une position supérieure et une position inférieure d'une tige de ressort hélicoïdal.

3. Lime endodontique selon la revendication 1, dans laquelle la pluralité de tiges de ressort en bobine hélicoïdale (22) sont positionnées pour être les unes face aux autres, avec un trou débouchant horizontal (152) traversant l'axe de rotation central de la lime endodontique (100) agencée entre celles-ci.

4. Lime endodontique selon la revendication 1, dans laquelle une section transversale de la partie lame de retrait de tissu (30) est configurée pour avoir une forme triangulaire ou rectangulaire.

5. Lime endodontique selon la revendication 1, dans laquelle l'axe de rotation central de la lime endodontique (100) a le même axe central que l'axe central perpendiculaire au diamètre interne de chacune des tiges de ressort en bobine hélicoïdale (22).

6. Lime endodontique selon la revendication 1, dans laquelle la partie de dispersion des contraintes (20) se compose de quatre tiges de ressort en bobine hélicoïdale.

7. Lime endodontique selon la revendication 1, dans laquelle les tiges de ressort en bobine hélicoïdale (22) sont coupées en hélice à partir d'une surface externe de la lime endodontique jusqu'à un trou débouchant le long de la direction longitudinale de la lime endodontique (100) une fois que le trou débouchant est fourni au niveau de l'axe central de la lime endodontique (100) dans la direction longitudinale de celle-ci.
